# EUROPEAN PATENT APPLICATION

(11) **EP 4 572 382 A1**
(43) Date of publication of application: **18.06.2025**
(21) Application number: 22954461.4
(22) Date of filing: 10.08.2022
(51) Int. Cl.: H04W 24/10

(54) **METHOD AND DEVICE FOR RANDOM ACCESS REPORT, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Stöckeler, Ferdinand
(86) International application number: PCT/CN2022/111586
(87) International publication number: WO 2024/031489

(57) **Abstract**

The present disclosure relates to the field of communications. Disclosed are a method and device for a random access (RA) report, and a storage medium. The method comprises: in response to receiving an RA information reporting request sent by an E-UTRA base station, a terminal reports RA information of an NR cell. The method is used for supporting the terminal to report the RA information of the NR cell.

## Description

### TECHNICAL FIELD

The present disclosure relates to the field of communication technology, and specifically to a random access reporting method and apparatus, and a storage medium.

### BACKGROUND

The Third Generation Partnership Project (3GPP) introduced a concept of dual connectivity carrier aggregation (DCCA) in new radio (NR) wireless communication systems, enabling a 5G-supported user equipment (UE) to connect to two base stations at the same time.

In a DCCA scenario, a terminal can be connected to an evolved universal terrestrial radio access (E-UTRA) base station and an NR base station at the same time, which can be called multi-radio dual connectivity (MR-DC). In this scenario, one base station serves as a master node (MN) and the other base station serves as secondary node (SN). Alternatively, the UE can be connected to two NR base stations at the same time, which is called new radio-dual connectivity (NR-DC), in which both the master node and the secondary node are NR base stations.

In the related art, a secondary node random access report (SN RACH Report) is supported only in the NR-DC scenario, but the SN RACH Report is not supported in an E-UTRA NR dual connectivity with E-UTRA connected to 5GC (NGEN-DC) scenario and an NR E-UTRA dual connectivity (EN-DC) scenario.

### SUMMARY

The present disclosure provides a random access reporting method and apparatus, and a storage medium, which may support an SN RACH Report in the NGEN-DC scenario and the EN-DC scenario.

According to a first aspect of the embodiments of the present disclosure, a random access reporting method is provided, performed by a terminal, including: reporting, by the terminal, RA information of a new radio (NR) cell, in response to receiving an RA information reporting request sent by an evolved universal terrestrial radio access (E-UTRA) base station.

In some embodiments, the RA information of the NR cell includes RA information of at least one cell in a secondary cell group (SCG) recorded by the terminal.

In some embodiments, the method is applicable in any of following dual connection scenarios: E-UTRA NR dual connectivity with E-UTRA connected to 5th generation core network (NGEN-DC); or NR E-UTRA dual connectivity (EN-DC) connected to an evolved packet core (EPC) network.

In some embodiments, the RA information of the NR cell includes RA information of at least one cell in a secondary cell group (SCG) recorded by the terminal.

In some embodiments, the method further comprises: in a case where random access is initiated in at least one cell in the secondary cell group, determining to record the RA information of the at least one cell; in a case where random access is initiated in at least one cell in a primary cell group, determining not to record the RA information of the at least one cell.

In some embodiments, the RA information is recorded in an NR RA report variable.

In some embodiments, the RA information reporting request comprises any one of: an existing long term evolution (LTE) RA information reporting request; or a newly defined RA information reporting request.

In some embodiments, reporting by the terminal the RA information of the NR cell comprises: in a case where a reporting condition is met, reporting by the terminal the RA information of the NR cell.

In some embodiments, the reporting condition comprises at least one of: existence of RA information of an available NR cell; or RA information of the NR cell registered to a public land mobile network (PLMN) being recorded.

In some embodiments, the method further comprises: reporting capability information, wherein the capability information is used to indicate whether the terminal supports reporting the RAinformation of the NR cell; and/or reporting an availability indication, wherein the availability indication is used to indicate that the terminal has RA information of an available NR cell.

In some embodiments, the RA information reporting request is carried in a user equipment (UE) information request message; the RA information is carried in a UE information response message.

In some embodiments, the method further comprises: after the RA information is successfully reported, discarding the RA information successfully reported; or after delaying a first duration, discarding the RA information.

According to a second aspect of the embodiments of the present disclosure, an RA reporting method is provided, performed by an E-UTRA base station, including: sending an RA information reporting request to a terminal; and receiving an RA information of a new radio (NR) cell reported by the terminal.

In some embodiments, the method is applicable in any of following dual connection scenarios: E-UTRA NR dual connectivity with E-UTRA connected to 5th generation core network (NGEN-DC); or NR E-UTRA dual connectivity (EN-DC) connected to an evolved packet core (EPC) network.

In some embodiments, the RA information of the NR cell includes RA information of at least one cell in a secondary cell group (SCG) recorded by the terminal.

In some embodiments, the RA information reporting request comprises any one of: an existing long term evolution (LTE) RA information reporting request; or a newly defined RA information reporting request.

In some embodiments, the method further comprises: receiving capability information, wherein the capability information is used to indicate whether the terminal supports reporting the RA information of the NR cell; and/or receiving an availability indication, wherein the availability indication is used to indicate that the terminal has RA information of an available NR cell.

In some embodiments, the RA information reporting request is carried in a user equipment (UE) information request message; the RA information is carried in a UE information response message.

According to a third aspect of the embodiments of the present disclosure, a random access reporting apparatus is provided, including: a reporting module, configured to report, by the terminal, RA information of a new radio (NR) cell, in response to receiving an RA information reporting request sent by an evolved universal terrestrial radio access (E-UTRA) base station.

In some embodiments, the apparatus is applicable in any of following dual connection scenarios: E-UTRA NR dual connectivity with E-UTRA connected to 5th generation core network (NGEN-DC); or NR E-UTRA dual Connectivity (EN-DC) connected to an evolved packet core (EPC) network.

In some embodiments, the RA information of the NR cell includes RA information of at least one cell in a secondary cell group (SCG) recorded by the terminal.

In some embodiments, the reporting module comprises: a determining unit, configured to in a case where random access is initiated in at least one cell in the secondary cell group, determine to record the RA information of the at least one cell; in a case where random access is initiated in at least one cell in a primary cell group, determine not to record the RA information of the at least one cell.

In some embodiments, the RA information is recorded in an NR RA report variable.

In some embodiments, the RA information reporting request comprises any one of: an existing long term evolution (LTE) RA information reporting request; or a newly defined RA information reporting request.

In some embodiments, the reporting module is configured to: in a case where a reporting condition is met, report by the terminal the RA information of the NR cell.

In some embodiments, the reporting condition comprises at least one of: existence of RA information of an available NR cell; or RA information of the NR cell registered to a public land mobile network (PLMN) being recorded.

In some embodiments, the reporting module is configured to: report capability information, wherein the capability information is used to indicate whether the terminal supports reporting the RA information of the NR cell; and/or report an availability indication, wherein the availability indication is used to indicate that the terminal has RA information of an available NR cell.

In some embodiments, the RA information reporting request is carried in a user equipment (UE) information request message; the RA information is carried in a UE information response message.

In some embodiments, the apparatus further comprises: a discarding module, configured to, after the RA information is successfully reported, discard the RA information successfully reported; or after delaying a first duration, discard the RA information.

According to a fourth aspect of the embodiments of the present disclosure, an RA reporting apparatus is provided, including: a sending module, configured to send an RA information reporting request to a terminal; and a receiving module, configured to receive an RA information of a new radio (NR) cell reported by the terminal.

In some embodiments, the apparatus is applicable in any of following dual connection scenarios: E-UTRA NR dual connectivity with E-UTRA connected to 5th generation core network (NGEN-DC); or NR E-UTRA dual Connectivity (EN-DC) connected to an evolved packet core (EPC) network.

In some embodiments, the RA information of the NR cell includes RA information of at least one cell in a secondary cell group (SCG) recorded by the terminal.

In some embodiments, the RA information reporting request comprises any one of: an existing long term evolution (LTE) RA information reporting request; or a newly defined RA information reporting request.

In some embodiments, the receiving module is configured to: receive capability information, wherein the capability information is used to indicate whether the terminal supports reporting the RA information of the NR cell; and/or receive an availability indication, wherein the availability indication is used to indicate that the terminal has RA information of an available NR cell.

In some embodiments, the RA information reporting request is carried in a user equipment (UE) information request message; the RA information is carried in a UE information response message.

According to a fifth aspect of the embodiments of the present disclosure, a terminal is provided. The terminal includes a processor, and a receiver connected to the processor. The processor is configured to execute executable instructions to perform steps in the method on the terminal side in the above various aspects.

According to a sixth aspect of the embodiments of the present disclosure, a network device is provided. The network device includes a processor, and a receiver connected to the processor. The processor is configured to execute executable instructions to perform steps in the method on the terminal side in the above various aspects.

According to a seventh aspect of the embodiments of the present disclosure, a computer-readable storage medium for storing at least one instruction, at least one program, a code set or an instruction set is provided. The at least one instruction, the at least one program, the code set or the instruction set are loaded and executed by a processor, to implement steps in the method on the terminal side described in the above various aspects or the method on the network device side described in the above various aspects.

According to an eighth aspect of the embodiments of the present disclosure, a computer program product or a computer program is provided. The computer program product (or the computer program) includes computer instructions stored in a computer-readable storage medium. The processor of a computer device reads the computer instructions from the computer-readable storage medium, and the processor executes the computer instructions, so that the computer device performs steps in the method on the terminal side described in the above various aspects or the method on the network device side described in the above various aspects.

According to a ninth aspect of the embodiments of the present disclosure, a chip is provided, including programmable logic circuits and/or program instructions. When the chip is running, steps in the method on the terminal side described in the above various aspects or the method on the network device side described in the above various aspects are implemented.

The technical solution provided by the embodiments of the present disclosure may include the following beneficial effects.

After receiving the RA information reporting request sent by the E-UTRA base station, the terminal reports the RA information of the SCG cell, so that a secondary node random access report is supported in NGEN-DC scenario and the EN-DC scenario.

### BRIEF DESCRIPTION OF THE DRAWINGS

In order to more clearly illustrate the technical solution in the embodiments of the present disclosure, the accompanying drawings used in the embodiments will be briefly introduced below. Obviously, the accompanying drawings in the following description are only some embodiments of the present disclosure. For those of ordinary skill in the art, other drawings can also be obtained based on these drawings without creative efforts.
FIG. 1 is a schematic diagram of a network in a dual connection scenario according to an embodiment of the present disclosure;
FIG. 2 is a schematic diagram of a communication system according to an embodiment of the present disclosure;
FIG. 3 is a flowchart of a random access reporting method according to an embodiment of the present disclosure;
FIG. 4 is a flowchart of a random access reporting method according to an embodiment of the present disclosure;
FIG. 5 is a flowchart of a random access reporting method according to an embodiment of the present disclosure;
FIG. 6 is a flowchart of a random access reporting method according to an embodiment of the present disclosure;
FIG. 7 is a flowchart of a random access reporting method according to an embodiment of the present disclosure;
FIG. 8 is a flowchart of a random access reporting method according to an embodiment of the present disclosure;
FIG. 9 is a flowchart of a random access reporting method according to an embodiment of the present disclosure;
FIG. 10 is a flowchart of a random access reporting method according to an embodiment of the present disclosure;
FIG. 11 is a block diagram of a random access reporting apparatus according to another embodiment of the present disclosure;
FIG. 12 is a block diagram of a random access reporting apparatus according to another embodiment of the present disclosure;
FIG. 13 is a block diagram of a random access reporting apparatus according to another embodiment of the present disclosure;
FIG. 14 is a block diagram of a UE according to an embodiment of the present disclosure; and
FIG. 15 is a block diagram of a network device according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

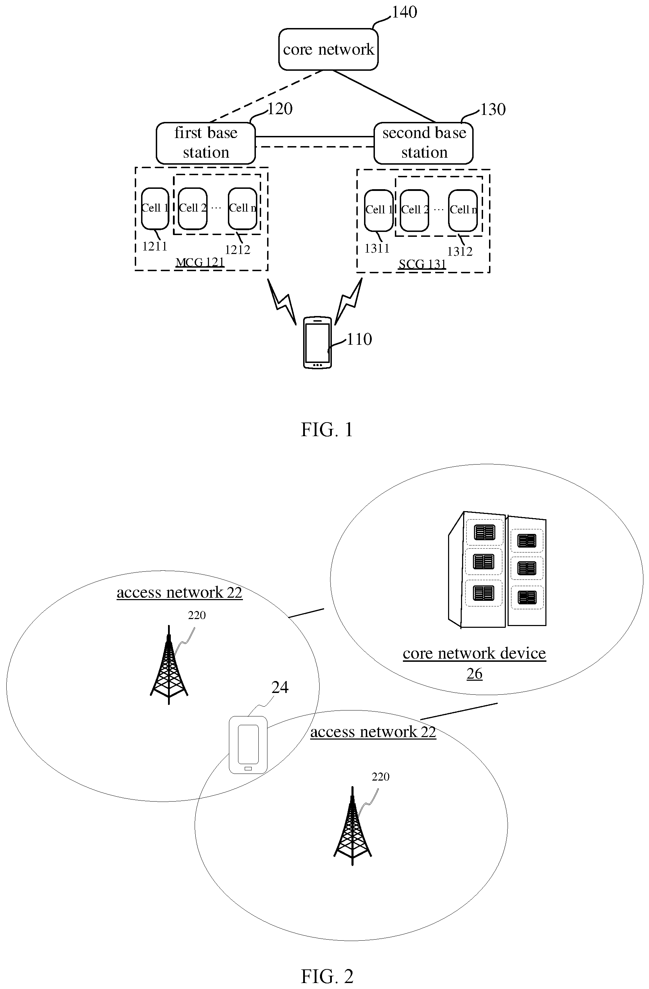

FIG. 1 shows a schematic diagram of a network in a dual connection scenario provided by an embodiment of the present application.

As shown in FIG. 1, when a terminal 110 is connected to a first base station 120 and a second base station 130 simultaneously, the first base station 120 is a master node (MN), and the second base station 130 is a secondary node (SN). The terminal 110 first accesses the first base station 120 as the master node, and then adds the second base station 130 as the secondary node as needed. The master node is also called an "anchor node", and the first base station 120 configured as the master node is responsible for interacting with a control plane of a 120 140.

Regardless of the first base station 120 or the second base station 130, the base station supports multiple carriers/cells for carrier aggregation. Therefore, at least two cells of the first base station 120 configured as the master node are called a master cell group (MCG) 121. The MCG 121 includes a primary cell (Pcell) 1211 and a plurality of secondary cells (Scells) 1212. At least two cells of the second base station 130 configured as the secondary node are called a secondary cell group (SCG). The SCG 131 includes a primary secondary cell (PSCell) 1311 and a primary of secondary cells 1312.

Four types of dual connectivity will be described as follows in detail.
1. EN-DC scenario: in this connection mode, the user terminal is connected to the E-UTRA base station and the NR base station simultaneously. The E-UTRA base station (also known as LTE base station) is the master node, the NR base station is the secondary node, and the master node is connected to an evolved packet core (EPC) network.
2. NGEN-DC scenario: in this connection mode, the user terminal is connected to the E-UTRA base station and the NR base station simultaneously. The E-UTRA base station is the master node, the NR base station is the secondary node, and the master node is connected to the 5G Core Network (5CG).
3. NE-DC (New Radio E-UTRA Dual Connectivity with NR Connected to 5GC) scenario: in this connection mode, the user terminal is connected to the E-UTRA base station and the NR base station simultaneously. The NR base station is the master node and the E-UTRA base station is the secondary node, the master node is connected to 5CG.
4. NR-DC (New Radio Dual Connectivity with NR Connected to 5GC) scenario: in this connection mode, the user terminal is connected to two NR base stations simultaneously. One NR base station is the master node and the other NR base station is the secondary node. The master node is connected to 5CG.

In related protocols, RAN3 has completed operations related to network interface signaling interaction to support the SN RACH Report in the above four dual connectivity scenarios. However, for RAN2, it currently only supports the SN RACH Report in the NR-DC scenario, but does not support the SN RACH Report in the EN-DC, NGEN-DC and NE-DC scenarios. Therefore, in order to solve the technical problem of supporting the SN RACH Report in the EN-DC scenario and the NGEN-DC scenario, the present disclosure provides a random access reporting method, as shown in the following embodiments.

FIG. 2 is a schematic diagram of a communication system according to an embodiment of the present disclosure. The communication system may include an access network 22, a user terminal 24 and a core network device 26.

The access network 22 includes several access network devices 220. The access network device 220 may be a base station, which is a device deployed in the access network to provide a wireless communication function for the user terminal (referred to as "terminal") 24. The base stations can include various forms of macro base stations, micro base stations, relay stations, access points, etc. In systems using different wireless access technologies, the names of devices with functions of the base station may be different. For example, in the long term evolution (LTE) system, it is called eNodeB or eNB; in the 5G NR system, it is called gNodeB or gNB. As the communication technology evolves, the description "base station" may change. The access network 22 may be constructed using at least one dual connectivity technology in the above-mentioned NGEN-DC and EN-DC.

The core network includes several core network devices 26. The function of the core network is responsible for exchange, routing, user data management, security, etc. of information within the system as well as exchange and transmission of information with other communication systems. The main network functions of the 5GC include: access and mobility management Function (AMF), session management function (SMF), user plane function (UPF), and network repository function (NRF), network exposure function (NEF), unified data management (UDM), location management function (LMF), and other network functions.

For convenience of description of the embodiments of the present disclosure, the above-mentioned devices that provide wireless communication functions for the user terminal 24 are collectively referred to as network devices. For example, the network device includes at least one of an access network device 220 or a core network device 26.

The user terminal 24 may include various handheld devices with wireless communication functions, vehicle-mounted devices, wearable devices, computing devices or other processing devices connected to wireless modems, as well as various forms of user equipment, mobile stations (MS), terminal devices and so on. For convenience of description, the devices mentioned above are collectively referred to as user terminals. The access network device 220 and the user terminal 24 communicate with each other through some air interface technologies, such as the Uu interface.

The technical solutions of the embodiments of the present disclosure may be applied to various communication systems, such as global system of mobile communication (GSM) system, code division multiple access (CDMA) system, wideband code division multiple access (WCDMA) system, general packet radio service (GPRS), long term evolution (LTE) system, LTE frequency division duplex (FDD) system, LTE time division duplex (TDD) system, advanced long term evolution (LTE-A) system, new radio (NR) system, evolution system of NR system, LTE-based access to Unlicensed spectrum (LTE-U) system, NR-U system, universal mobile telecommunication system (UMTS), worldwide interoperability for microwave access (WiMAX) communication system, wireless local area network (WLAN), wireless fidelity (WiFi), next-generation communication systems or other communication systems, etc.

Generally speaking, the traditional communication system supports a limited number of connections, which is easy to implement. However, with development of the communication technology, the mobile communication system will not only support traditional communication, but also support, for example, device to device (D2D) communication, machine to machine (M2M) communication, machine type communication (MTC), vehicle to vehicle (V2V) communication and vehicle to everything (V2X) communication, etc. Embodiments of the present disclosure may also be applied to these communication systems.

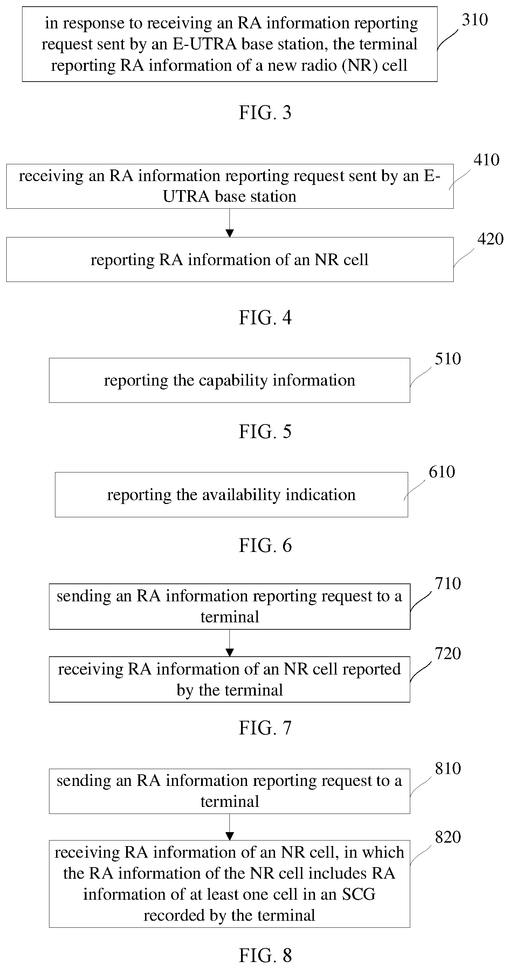

FIG. 3 is a flowchart of a random access reporting method according to an embodiment of the present disclosure. The method is applied to the communication system shown in FIG. 2, and performed by a terminal. The method may include the following steps.

At step 310, in response to receiving an RA information reporting request sent by an evolved universal terrestrial radio access (E-UTRA) base station, the terminal reports RA information of a new radio (NR) cell.

In some embodiments, the above method may be applied in any of the following dual connectivity scenarios: E-UTRA NR dual connectivity with E-UTRA connected to 5th generation core network (NGEN-DC); or NR E-UTRA dual Connectivity (EN-DC) connected to an EPC network.

In the NGEN-DC scenario, in this connection mode, the user terminal is connected to the E-UTRA base station and the NR base station simultaneously. The E-UTRA base station is the master node, the NR base station is the secondary node, and the master node is connected to the 5G Core Network (5CG).

In the EN-DC scenario, in this connection mode, the user terminal is connected to the E-UTRA base station and the NR base station simultaneously. The E-UTRA base station is the master node, the NR base station is the secondary node, and the master node is connected to an evolved packet core (EPC) network.

In some embodiments, the RA information of the NR cell includes RA information of at least one cell in a secondary cell group (SCG) recorded by the terminal. For example, for at least one of the NGEN-DC scenario or the EN-DC scenario, the terminal merely recodes the RA information of an SCG cell, including recoding at least one of the followings to an RA report variable.
- If the terminal initiates random access in at least one cell in the SCG, it is determined to record the RA information of the cell.
   For example, if the terminal initiates the random access in a PSCell in an SCG, it is determined to record RA information of the PSCell; or if the terminal initiates the random access in a Scell in the SCG, it is determined to record RA information of the Scell; or if the terminal initiates the random access in a PSCell and a Scell in the SCG, it is determined to record RA information of the PSCell and RA information of the Scell.
- If the terminal initiates random access in at least one cell in an MCG, it is determined not to record the RA information of the cell.

For example, if the terminal initiates the random access in a Pcell in the MCG, it is determined not to record RA information of the Pcell; or if the terminal initiates the random access in a Scell in the MCG, it is determined not to record RA information of the Scell; or if the terminal initiates the random access in a Pcell and a Scell in the MCG, it is determined not to record RA information of the Pcell and RA information of the Scell.

For example, the RA information of the NR cell includes the RA information of the SCG cell.

In some embodiments, the "NR cell" is equivalent to the "SCG cell".

In some embodiments, the RA information of the NR cell is recorded in an NR RA report variable (VarRA-Report). For example, in response to receiving an RA information reporting request sent by an E-UTRA base station, the terminal reports RA information in the NR RA report variable to the E-UTRA base station.

In some embodiments, the RA information reporting request includes any one of the followings.
- Reuse the RA information reporting request (rach-ReportReq) in the existing LTE system.
   When the RA information reporting request sent by the E-UTRA base station reuses the RA information reporting request in the existing LTE system, the terminal reports the RA information of the SCG cell, or the terminal reports the RA information of the MCG cell and the SCG cell.
- A newly defined RA information reporting request.

In some embodiments, when a newly defined RA information reporting request is used as the RA information reporting request sent by the E-UTRA base station, the newly defined RA information reporting request may be merely used for requesting the terminal to report the RA information of the SCG cell. That is, when the E-UTRA base station sends the newly defined RA information reporting request, the terminal merely reports the RA information of the SCG cell.

In some embodiments, when a newly defined RA information reporting request is used as the RA information reporting request sent by the E-UTRA base station, the newly defined RA information reporting request may be used for requesting the terminal to report the RA information of the SCG cell and the RA information of the MCG cell. That is, when the E-UTRA base station sends the newly defined RA information reporting request, the terminal reports the RA information of the SCG cell and the RA information of the MCG cell.

**In** some embodiments, when two newly defined RA information reporting requests are used as the RA information reporting request sent by the E-UTRA base station, the two newly defined RA information reporting requests may be used for requesting the terminal to report the RA information of the SCG cell and the RA information of the MCG cell, respectively. That is, when the E-UTRA base station sends a first newly defined RA information reporting request, the terminal reports the RA information of the SCG cell; and when the E-UTRA base station sends a second newly defined RA information reporting request, the terminal reports the RA information of the MCG cell; and when the E-UTRA base station sends the first newly defined RA information reporting request and the second newly defined RA information reporting request, the terminal reports the RA information of the SCG cell and the RA information of the MCG cell, respectively.

In some embodiments, in a case where a reporting condition is met, the RA information of the SCG cell is reported. For example, the reporting condition includes at least one of:
- existence of RA information of an available SCG cell; or
- RA information of the SCG cell registered to a public land mobile network (PLMN) being recorded.

Optionally, when it is determined that RA information of an available SCG cell exists in the terminal record, the RA information of the SCG cell is reported to the E-UTRA base station.

Optionally, when it is determined that the RA information of the SCG cell registered to the PLMN exists in the terminal record, the RA information of the SCG cell is reported to the E-UTRA base station.

Optionally, when it is determined that the RA information of the available SCG cell and the RAinformation of the SCG cell registered to the PLMN exist in the terminal record, the RA information of the two SCG cells is reported to the E-UTRA base station.

In some embodiments, the RA information reporting request is carried in a user equipment (UE) information request message; the RA information is carried in a UE information response message.

In some embodiments, the terminal reports capability information, in which the capability information is used to indicate whether the terminal supports reporting the RA information of the NR cell; and/or the terminal reports an availability indication, in which the availability indication is used to indicate that the terminal has RA information of an available SCG cell.

Optionally, before the terminal reports the capability information, the E-UTRA base station sends a capability request or a capability reporting indication.

In some embodiments, the terminal discards the RA information successfully reported after successfully reporting the RA information. Or the terminal discards the RA information after delaying a first duration. For example, a starting time from which the first duration is delayed may be a recording time of the RA information, or a reporting time of the RA information, or a time when the RA information is successfully reported. The first duration is a value predefined or preconfigured, or dynamically configured. For example, the first duration is 48 hours.

In some embodiments, in response to receiving an RA information reporting request sent by an E-UTRA base station, the terminal reports RA information of an E-UTRAN cell. For example, the RA information of the E-UTRAN cell and the RA information of the SCG cell are reported simultaneously or separately.

In summary, with the method provided in the present disclosure, after receiving the RA information reporting request sent by the E-UTRA base station, the terminal reports the RAinformation of the SCG cell, so that the SN RA Report may be supported in the NGEN-DC scenario and the EN-DC scenario.

For the NGEN-DC scenario and the EN-DC scenario, the E-UTRA base station (or called LTE base station) is the master node, the NR base station is the secondary node. In the embodiments of the present disclosure, the MCG for carrier aggregation in the E-UTRA base station is called the E-UTRAN cell or the LTE cell or the MCG cell. The SCG for carrier aggregation in the NR base station is called the NR cell or the SCG cell. It should be understood that "the E-UTRAN cell or the LTE cell or the MCG cell" may be equivalent, and "the NR cell or the SCG cell" may be equivalent.

The method provided in the embodiments of the present disclosure supports reporting the RA information of the NR cell in the NGEN-DC scenario and the EN-DC scenario.

For example, the RA information reporting request is used for requesting the terminal to report RA information of at least one cell. For example, the RA information of the at least one cell includes: RA information of an MCG cell, or RA information of an SCG cell, or RA information of an MCG cell and RA information of an SCG cell, which is not limited in the present disclosure.

Optionally, the RA information reporting request uses an existing E-UTRA RA information reporting request, or the RA information reporting request uses a newly defined NR RA information reporting request, which is not limited herein. The term "existing" means that it is defined by a communication protocol before the application filing date of the present disclosure, for example, having been defined in 3GPP R16 or R17. The above term "newly defined" means that it is defined by a communication protocol after the application filing date of the present disclosure, for example, defined in 3GPP R18 or R19.

Optionally, when the terminal receives the RA information reporting request sent by the E-UTRA base station, the terminal reports the RA information of the SCG cell in an NR RA report variable (VarRA-Report), or the terminal reports newly added RA information or differential RA information compared to the RA information latest reported, or the terminal reports the RA information of the SCG cell that is latest recorded, which is not limited herein.

FIG. 4 is a flowchart of a random access reporting method according to an embodiment of the present disclosure. The method is applied to the communication system shown in FIG. 1, and performed by a terminal. The method may include the following steps.

At step 410, an RA information reporting request sent by an E-UTRA base station is received.

For example, the RA information reporting request is used for requesting the terminal to report RA information of an available cell. The RA information includes RA information of an MCG cell and/or RA information of an SCG cell.

At step 420, RA information of an NR cell is reported.

The RA information of the NR cell includes RA information of at least one cell in an SCG recorded by the terminal.

For example, the RA information reporting request includes any one of the following:
1. the RA information reporting request using an RA information reporting request in an existing LTE system; or
**2.** the RA information reporting request using a newly defined RA information reporting request.

The type of the RA information reported by the terminal will be explained.

Optionally, the terminal reports RA information of an MCG cell, and/or the terminal reports RA information of an SCG cell.

The RA information of the MCG cell includes RA information of at least one cell in the MCG. Optionally, the terminal reports RA information of a primary cell in the MCG, and/or the terminal reports RA information of a secondary cell in the MCG.

The RA information of the SCG cell includes RA information of at least one cell in the SCG. Optionally, the RA information of the SCG cell reported by the terminal includes RA information of a primary secondary cell in the SCG, and/or RA information of a secondary cell in the SCG.

In this embodiment, the terminal reports the RA information of the primary secondary cell in the SCG recoded in the EN-DC scenario and/or the NGEN-DC scenario as the RA information of the SCG cell.

In the following, the RA information of the SCG cell recorded by the terminal in the embodiments of the present disclosure will be explained.

For example, if the random access is initiated in at least one cell in the SCG, it is determined to record the RA information of the cell.

When the terminal initiates random access in a primary secondary cell and/or at least one secondary cell in the SCG, the terminal records the RA information of the primary secondary cell and/or the at least one secondary cell.

In an embodiment when the terminal initiates random access in the primary secondary cell of the SCG, the terminal records the RA information of the primary secondary cell.

For example, if the random access is initiated in at least one cell in the MCG, it is determined not to record the RA information of the cell.

When the terminal initiates random access in a primary cell and/or at least one secondary cell in the MCG, the terminal does not record the RA information of the primary cell and/or the at least one secondary cell.

In an embodiment when the terminal initiates random access in the primary cell of the MCG, the terminal does not record the RA information of the primary cell.

For example, the above RA information is recorded in the NR RA report variable.

In response to receiving an RA information reporting request sent by an E-UTRA base station, the terminal reports the RA information in the NR RA variable to the E-UTRA base station.

A method of the terminal reporting the RA information will be explained.

In some embodiments, when the RA information reporting request sent by the E-UTRA base station reuses the RA information reporting request in the existing LTE system, the terminal reports the RA information of the SCG cell, or the terminal reports the RA information of the MCG cell and the RA information of the SCG cell.

When a newly defined RA information reporting request is used as the RA information reporting request sent by the E-UTRA base station, the newly defined RA information reporting request may be merely used for requesting the terminal to report the RA information of the SCG cell. That is, when the E-UTRA base station sends the newly defined RA information reporting request, the terminal merely reports the RA information of the SCG cell.

In some embodiments, when a newly defined RA information reporting request is used as the RA information reporting request sent by the E-UTRA base station, the newly defined RA information reporting request may be used for requesting the terminal to report the RA information of the SCG cell and the RA information of the MCG cell. That is, when the E-UTRA base station sends the newly defined RA information reporting request, the terminal reports the RA information of the SCG cell and the RA information of the MCG cell.

In some embodiments, when a newly defined RA information reporting request is used as the RA information reporting request sent by the E-UTRA base station, the newly defined RA information reporting request may be used for requesting the terminal to report the RA information of the SCG cell and the RA information of the MCG cell. That is, when the E-UTRA base station sends the newly defined RA information reporting request, the terminal reports the RA information of the SCG cell and the RA information of the MCG cell.

In some embodiments, when two newly defined RA information reporting requests are used as the RA information reporting request sent by the E-UTRA base station, the two newly defined RA information reporting requests may be used for requesting the terminal to report the RA information of the SCG cell and the RA information of the MCG cell, respectively. That is, when the E-UTRA base station sends a first newly defined RA information reporting request, the terminal reports the RA information of the SCG cell; and when the E-UTRA base station sends a second newly defined RA information reporting request, the terminal reports the RA information of the MCG cell; and when the E-UTRA base station sends the first newly defined RA information reporting request and the second newly defined RA information reporting request, the terminal reports the RA information of the SCG cell and the RA information of the MCG cell, respectively.

The above reporting condition will be explained in detail below.

For example, the reporting condition includes at least one of the following:
1. existence of RA information of an available NR cell; or
2. RA information of the NR cell registered to a PLMN being recorded.

Optionally, when it is determined that RA information of an available NR cell exists in the terminal record, the RA information of the NR cell is reported to the E-UTRA base station.

Optionally, when it is determined that the RA information of the NR cell registered to the PLMN exists in the terminal record, the RA information of the NR cell is reported to the E-UTRA base station.

Optionally, when it is determined that the RA information of the available NR cell and the RA information of the NR cell registered to the PLMN exist in the terminal record, the RA information of the two NR cells is reported to the E-UTRA base station.

The RA information is reported to the E-UTRA base station through a UEInformationResponse message. The RA information reporting request is issued to the terminal through a UEInformationRequest message.

In some embodiments, the terminal may send the RA information of the NR cell on its own. That is, without receiving the RA information reporting request sent by the network, the terminal reports the RA information of the NR cell that meets the condition on its own. For example, when the terminal initiates random access in the primary secondary cell of the SCG and reports the RA information of the primary secondary cell.

In some embodiments, the above method may be applied to any of the following dual connectivity scenarios: NGEN-DC; or EN-DC connected to an EPC network.

In summary, with the method provided in the present disclosure, after receiving the RA information reporting request sent by the E-UTRA base station, the terminal reports the RA information of the NR cell, so that the SN RA Report may be supported in the NGEN-DC scenario and the EN-DC scenario.

The terminal may further report capability information. FIG. 5 is a flowchart of a random access reporting method according to an embodiment of the present disclosure. The method is applied to the communication system shown in FIG. 2, and performed by a terminal. The method may include the following steps.

At step 510, the capability information is reported.

The capability information is used for indicating whether the terminal supports reporting RA information of an NR cell.

Optionally, in addition to reporting the RA information of the NR cell, the terminal further reports the capability information to the E-UTRA base station. The capability information is used for indicating that the terminal supports reporting the RA information of the NR cell or that the terminal does not support reporting the RA information of the NR cell.

Optionally, before reporting the RA information of the NR cell, the terminal reports the capability information to the E-UTRA base station. The terminal reports the capability information to the E-UTRA base station directly or reports the capability information to the E-UTRA base station after receiving a request or an indication of the E-UTRA base station.

In some embodiments, the above method may be applied to any of the following dual connectivity scenarios: NGEN-DC; or EN-DC connected to an EPC network.

The terminal may further report an availability indication. FIG. 6 is a flowchart of a random access reporting method according to an embodiment of the present disclosure. The method is applied to the communication system shown in FIG. 2, and performed by a terminal. The method may include the following steps.

At step 610, the availability indication is reported. The availability indication is used to indicate that the terminal has RA information of an available NR cell.

In some embodiments, the above method may be applied to any of the following dual connectivity scenarios: NGEN-DC; or EN-DC connected to an EPC network.

Optionally, the availability indication indicates that the terminal has RA information of an available SCG cell, or the terminal has RA information of an available MCG cell, or the availability indication indicates that it is determined that RA information of an available MCG cell and an available SCG cell exist in the terminal record.

Optionally, when receiving the RA information reporting request from the E-UTRA base station, the terminal first reports the availability indication to the E-UTRA base station, and then reports the RA information of the SCG cell; or the terminal reports the availability indication and the RA information of the available SCG cell at the same time; or, the terminal only reports the availability indication, and after receiving the reporting request sent by the E-UTRA base station again, the terminal reports the RA information of the SCG cell, which is not limited.

In some embodiments, after the RA information is successfully reported, the successfully reported RA information is discarded; or, after a first duration is delayed, the RA information is discarded.

Optionally, when the terminal reports the RA information of the SCG cell to the E-UTRA base station successfully, the terminal immediately deletes the successfully reported RA information of the SCG cell from the NR RA report variable.

Optionally, after delaying the first duration from the time when the terminal starts to report the RAinformation of the SCG cell configured as the starting time, the RA information of the SCG cell is correspondingly deleted from the NR RA report variable. For example: the first duration is 48 hours.

Optionally, after delaying the first duration from the time when the terminal starts to record the RA information of the SCG cell configured as the starting time, the RA information of the SCG cell is correspondingly deleted from the NR RA report variable.

Optionally, after delaying the first duration from the time when the terminal reports the RA information of the SCG cell to the E-UTRA base station successfully configured as the starting time, the RA information of the SCG cell is correspondingly deleted from the NR RA report variable.

In some embodiments, the above method may be applied to any of the following dual connectivity scenarios: NGEN-DC; or EN-DC connected to an EPC network.

In summary, with the method provided in the present disclosure, after receiving the RA information reporting request sent by the E-UTRA base station, the terminal reports the RA information of the NR cell, so that the SN RA Report may be supported in the NGEN-DC scenario and the EN-DC scenario.

It should be noted that the above-mentioned embodiments can be freely combined or split into new embodiments, which is not limited in the present disclosure.

FIG. 7 is a flowchart of a random access reporting method according to an embodiment of the present disclosure. The method is applied to the communication system shown in FIG. 2, and performed by an E-UTRA base station. The method may include the following steps.

At step 710, an RA information reporting request is sent to a terminal.

In some embodiments, the above method may be applied in any of the following dual connectivity scenarios: E-UTRA NR dual connectivity with E-UTRA connected to 5th generation core network (NGEN-DC); or NR E-UTRA dual Connectivity (EN-DC) connected to an EPC network.

In the NGEN-DC scenario, in this connection mode, the user terminal is connected to the E-UTRA base station and the NR base station simultaneously. The E-UTRA base station is the master node, the NR base station is the secondary node, and the master node is connected to the 5G Core Network (5CG).

In the EN-DC scenario, in this connection mode, the user terminal is connected to the E-UTRA base station and the NR base station simultaneously. The E-UTRA base station is the master node, the NR base station is the secondary node, and the master node is connected to an evolved packet core (EPC) network.

In some embodiments, the RA information reporting request includes any one of the followings.
- Reuse the RA information reporting request in the existing LTE system.
- A newly defined RA information reporting request.

In some embodiments, the RA information reporting request is carried in a user equipment (UE) information request message; the RA information is carried in a UE information response message.

For example a random access information reporting request is used for requesting the terminal to report the RA information of an available cell.

At step 720, RA information of an NR cell reported by the terminal is received.

In some embodiments, the RA information of the SCG cell includes RA information of at least one cell in an SCG recorded by the terminal. For example, the RA information of the SCG cell recoded by the terminal includes recoding at least one of the followings to an RA report variable.
- If the terminal initiates random access in at least one cell in the SCG, it is determined to record the RA information of the cell.
   For example, if the terminal initiates the random access in a PSCell in an SCG, it is determined to record RA information of the PSCell; or if the terminal initiates the random access in a Scell in the SCG, it is determined to record RA information of the Scell; or if the terminal initiates the random access in a PSCell and a Scell in the SCG, it is determined to record RA information of the PSCell and RA information of the Scell.
- If the terminal initiates random access in at least one cell in an MCG, it is determined not to record the RA information of the cell.

For example, if the terminal initiates the random access in a Pcell in the MCG, it is determined not to record RA information of the Pcell; or if the terminal initiates the random access in a Scell in the MCG, it is determined not to record RA information of the Scell; or if the terminal initiates the random access in a Pcell and a Scell in the MCG, it is determined not to record RA information of the Pcell and RA information of the Scell.

For example, the RA information of the NR cell includes the RA information of the SCG cell.

In some embodiments, the "NR cell" is equivalent to the "SCG cell".

In some embodiments, the RA information of the SCG cell is recorded in an NR RA report variable. For example, in response to receiving an RA information reporting request sent by an E-UTRA base station, the terminal reports RA information in the NR RA report variable to the E-UTRA base station.

n some embodiments, when the RA information reporting request sent by the E-UTRA base station reuses the RA information reporting request in the existing LTE system, the terminal reports the RA information of the SCG cell, or the terminal reports the RA information of the MCG cell and the SCG cell.

In some embodiments, when a newly defined RA information reporting request is used as the RA information reporting request sent by the E-UTRA base station, the newly defined RA information reporting request may be merely used for requesting the terminal to report the RA information of the SCG cell. That is, when the E-UTRA base station sends the newly defined RA information reporting request, the terminal merely reports the RA information of the SCG cell.

In some embodiments, when a newly defined RA information reporting request is used as the RA information reporting request sent by the E-UTRA base station, the newly defined RA information reporting request may be used for requesting the terminal to report the RA information of the SCG cell and the RA information of the MCG cell. That is, when the E-UTRA base station sends the newly defined RA information reporting request, the terminal reports the RA information of the SCG cell and the RA information of the MCG cell.

In some embodiments, when two newly defined RA information reporting requests are used as the RA information reporting request sent by the E-UTRA base station, the two newly defined RA information reporting requests may be used for requesting the terminal to report the RA information of the SCG cell and the RA information of the MCG cell, respectively. That is, when the E-UTRA base station sends a first newly defined RA information reporting request, the terminal reports the RA information of the SCG cell; and when the E-UTRA base station sends a second newly defined RA information reporting request, the terminal reports the RA information of the MCG cell; and when the E-UTRA base station sends the first newly defined RA information reporting request and the second newly defined RA information reporting request, the terminal reports the RA information of the SCG cell and the RA information of the MCG cell, respectively.

In some embodiments, in a case where a reporting condition is met, the RA information of the SCG cell is reported. For example, the reporting condition includes at least one of:
- existence of RA information of an available NR cell; or
- RA information of the NR cell registered to a public land mobile network (PLMN) being recorded.

Optionally, when it is determined that RA information of an available SCG cell exists in the terminal record, the E-UTRA base station receives the RA information of the SCG cell reported by the terminal.

Optionally, when it is determined that the RA information of the SCG cell registered to the PLMN exists in the terminal record, the E-UTRA base station receives the RA information of the SCG cell reported by the terminal.

Optionally, when it is determined that the RA information of the available SCG cell and the RAinformation of the SCG cell registered to the PLMN exist in the terminal record, the E-UTRA base station receives the RA information of the two SCG cells reported by the terminal.

In some embodiments, the terminal reports capability information, in which the capability information is used to indicate whether the terminal supports reporting the RA information of the NR cell. Optionally, before the terminal reports the capability information, the E-UTRA base station sends a capability request to the terminal or a capability reporting indication.

In some embodiments, the terminal reports an availability indication, in which the availability indication is used to indicate that the terminal has RA information of an available SCG cell.

In some embodiments, the terminal discards the RA information successfully reported after successfully reporting the RA information. Or the terminal discards the RA information after delaying a first duration. For example, a starting time from which the first duration is delayed may be a recording time of the RA information, or a reporting time of the RA information, or a time when the RA information is successfully reported. The first duration is a value predefined or preconfigured, or dynamically configured. For example, the first duration is 48 hours.

In some embodiments, in response to receiving an RA information reporting request sent by an E-UTRA base station, the terminal reports RA information of an MCG cell. For example, the RA information of the MCG cell and the RA information of the SCG cell are reported simultaneously or separately.

In summary, with the method provided in the present disclosure, after receiving the RA information reporting request sent by the E-UTRA base station, the terminal reports the RA information of the NR cell, so that the SN RA Report may be supported in the NGEN-DC scenario and the EN-DC scenario.

For the NGEN-DC scenario and the EN-DC scenario, the E-UTRA base station (or called LTE base station) is the master node, the NR base station is the secondary node. In the embodiments of the present disclosure, the MCG for carrier aggregation in the E-UTRA base station is called the E-UTRAN cell or the LTE cell or the MCG cell. The SCG for carrier aggregation in the NR base station is called the NR cell or the SCG cell. It should be understood that "the E-UTRAN cell or the LTE cell or the MCG cell" may be equivalent, and "the NR cell or the SCG cell" may be equivalent.

The method provided in the embodiments of the present disclosure supports reporting the RA information of the SCG cell in the NGEN-DC scenario and the EN-DC scenario.

For example, the RA information reporting request is used for requesting the terminal to report RA information of at least one cell. For example, the RA information of the at least one cell includes: RA information of an MCG cell, or RA information of an SCG cell, or RA information of an MCG cell and RA information of an SCG cell, which is not limited in the present disclosure.

Optionally, the RA information reporting request uses an RA information reporting request of an existing LTE system, or the RA information reporting request uses a newly defined RA information reporting request, which is not limited herein. The term "existing" means that it is defined by a communication protocol before the application filing date of the present disclosure, for example, having been defined in 3GPP R16 or R17. The above term "newly defined" means that it is defined by a communication protocol after the application filing date of the present disclosure, for example, defined in 3GPP R18 or R19.

Optionally, when the E-UTRA base station sends the RA information reporting request to the terminal, the RA information of the SCG cell received by the E-UTRA base station and reported by the terminal is selected from an NR RA report variable, or the E-UTRA base station receives newly added RA information or differential RA information reported by the terminal compared to the RA information latest reported, or the E-UTRA base station receives the RA information of the SCG cell that is latest recorded, which is not limited herein.

FIG. 8 is a flowchart of a random access reporting method according to an embodiment of the present disclosure. The method is applied to the communication system shown in FIG. 2, and performed by an E-UTRA base station. The method may include the following steps.

At step 810, an RA information reporting request is sent to a terminal.

In some embodiments, the above method may be applied to any of the following dual connectivity scenarios: NGEN-DC; or EN-DC connected to an EPC network.

For example, the RA information reporting request is used for requesting the terminal to report RA information of an available cell. The RA information includes RA information of an E-UTRA cell and/or RA information of an NR cell.

For example, the RA information reporting request includes any one of the followings.
1.The RA information reporting request reuses the RA information reporting request in the existing LTE system.
2. The RA information reporting request reuses an independent RA information reporting request.

At step 820, RA information of an NR cell is received. The RA information of the NR cell includes RA information of at least one cell in an SCG recorded by the terminal.

The type of the RA information reported by the terminal will be explained.

Optionally, the terminal reports RA information of an MCG cell, and/or the terminal reports RA information of an SCG cell.

The RA information of the MCG cell includes RA information of at least one cell in the MCG. Optionally, the terminal reports RA information of a primary cell in the MCG, and/or the terminal reports RA information of a secondary cell in the MCG.

The RA information of the SCG cell includes RA information of at least one cell in the SCG. Optionally, the RA information of the SCG cell reported by the terminal includes RA information of a primary secondary cell in the SCG, and/or RA information of a secondary cell in the SCG.

In this embodiment, the terminal reports the RA information of the primary secondary cell in the SCG recoded in the EN-DC scenario and/or the NGEN-DC scenario as the RA information of the SCG cell.

In the following, the RA information of the SCG cell recorded by the terminal in the embodiments of the present disclosure will be explained.

For example, if the random access is initiated in at least one cell in the SCG, it is determined to record the RA information of the cell.

When the terminal initiates random access in a primary secondary cell and/or at least one secondary cell in the SCG, the terminal records the RA information of the primary secondary cell and/or the at least one secondary cell.

In an embodiment when the terminal initiates random access in the primary secondary cell of the SCG, the terminal records the RA information of the primary secondary cell.

For example, if the random access is initiated in at least one cell in the MCG, it is determined not to record the RA information of the cell.

When the terminal initiates random access in a primary cell and/or at least one secondary cell in the MCG, the terminal does not record the RA information of the primary cell and/or the at least one secondary cell.

In an embodiment when the terminal initiates random access in the primary cell of the MCG, the terminal does not record the RA information of the primary cell.

For example, the above RA information is recorded in the NR RA report variable.

In some embodiments, the terminal reports the RA information in the NR RA variable to the E-UTRA base station.

A method of the terminal reporting the RA information will be explained.

In some embodiments, when the RA information reporting request sent by the E-UTRA base station reuses the existing E-UTRA RA information reporting request, the terminal reports the RA information of the SCG cell, or the terminal reports the RA information of the MCG cell and the RA information of the SCG cell.

When a newly defined RA information reporting request is used as the RA information reporting request sent by the E-UTRA base station, the newly defined RA information reporting request may be merely used for requesting the terminal to report the RA information of the SCG cell. That is, when the E-UTRA base station sends the newly defined RA information reporting request, the terminal merely reports the RA information of the SCG cell.

The above reporting condition will be explained in detail below.

For example, the reporting condition includes at least one of the following:
1. existence of RA information of an available NR cell; or
2. RA information of the NR cell registered to a PLMN being recorded.

Optionally, when it is determined that RA information of an available SCG cell exists in the terminal record, the RA information of the SCG cell is reported to the E-UTRA base station.

Optionally, when it is determined that the RA information of the SCG cell registered to the PLMN exists in the terminal record, the RA information of the SCG cell is reported to the E-UTRA base station.

Optionally, when it is determined that the RA information of the available SCG cell and the RAinformation of the SCG cell registered to the PLMN exist in the terminal record, the RA information of the two SCG cells is reported to the E-UTRA base station.

In some embodiments, the RA information reporting request is carried in a UE Information Request message. The RA information is carried in a UE Information Response message.

In some embodiments, the terminal may send the RA information of the SCG cell on its own. That is, without receiving the RA information reporting request sent by the network, the terminal reports the RA information of the SCG cell that meets the condition on its own. For example, when the terminal initiates random access in the primary secondary cell of the SCG and reports the RA information of the primary secondary cell.

In summary, with the method provided in the present disclosure, after receiving the RA information reporting request sent by the E-UTRA base station, the terminal reports the RAinformation of the SCG cell, so that the SN RA Report may be supported in the NGEN-DC scenario and the EN-DC scenario.

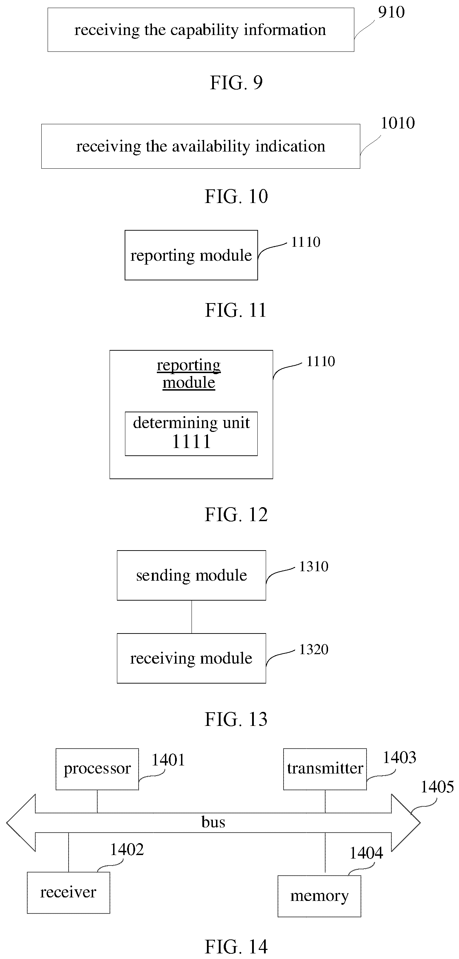

The E-UTRA base station may further receive capability information. FIG. 9 is a flowchart of a random access reporting method according to an embodiment of the present disclosure. The method is applied to the communication system shown in FIG. 2, and performed by the E-UTRA base station. The method may include the following steps.

At step 910, the capability information is received.

The capability information is used for indicating whether the terminal supports reporting RA information of an NR cell.

Optionally, in addition to reporting the RA information of the SCG cell, the terminal further reports the capability information to the E-UTRA base station. The capability information is used for indicating that the terminal supports reporting the RA information of the SCG cell or that the terminal does not support reporting the RA information of the SCG cell.

Optionally, before reporting the RA information of the SCG cell, the terminal reports the capability information to the E-UTRA base station. The terminal reports the capability information to the E-UTRA base station directly or reports the capability information to the E-UTRA base station after receiving a request or an indication of the E-UTRA base station.

In some embodiments, the above method may be applied to any of the following dual connectivity scenarios: NGEN-DC; or EN-DC connected to an EPC network.

The E-UTRA base station may further receive an availability indication. FIG. 10 is a flowchart of a random access reporting method according to an embodiment of the present disclosure. The method is applied to the communication system shown in FIG. 2, and performed by the E-UTRA base station. The method may include the following steps.

At step 1010, the availability indication is received.

The availability indication is used to indicate that the terminal has RA information of an available NR cell.

Optionally, when receiving the RA information reporting request from the E-UTRA base station, the terminal first reports the availability indication to the E-UTRA base station, and then reports the RA information of the SCG cell; or the terminal reports the availability indication and the RA information of the available SCG cell at the same time; or, the terminal only reports the availability indication, and after receiving the reporting request sent by the E-UTRA base station again, the terminal reports the RA information of the SCG cell, which is not limited.

In some embodiments, after the RA information is successfully reported, the successfully reported RA information is discarded; or, after a first duration is delayed, the RA information is discarded.

Optionally, when the terminal reports the RA information of the SCG cell to the E-UTRA base station successfully, the terminal immediately deletes the successfully reported RA information of the SCG cell from the NR RA report variable.

Optionally, after delaying the first duration from the time when the terminal starts to report the RAinformation of the SCG cell configured as the starting time, the RA information of the SCG cell is correspondingly deleted from the NR RA report variable. For example: the first duration is 48 hours.

Optionally, after delaying the first duration from the time when the terminal starts to record the RA information of the SCG cell configured as the starting time, the RA information of the SCG cell is correspondingly deleted from the NR RA report variable.

Optionally, after delaying the first duration from the time when the terminal reports the RA information of the SCG cell to the E-UTRA base station successfully configured as the starting time, the RA information of the SCG cell is correspondingly deleted from the NR RA report variable.

In some embodiments, the above method may be applied to any of the following dual connectivity scenarios: NGEN-DC; or EN-DC connected to an EPC network.

In summary, with the method provided in the present disclosure, after receiving the RA information reporting request sent by the E-UTRA base station, the terminal reports the RA information of the NR cell, so that the SN RA Report may be supported in the NGEN-DC scenario and the EN-DC scenario.

It should be noted that the above-mentioned embodiments can be freely combined or split into new embodiments, which is not limited in the present disclosure.

FIG. 11 is a block diagram of a random access apparatus according to an embodiment of the present disclosure. The apparatus may be implemented as part or all of a terminal by software, hardware, or a combination thereof. The apparatus includes a reporting module 1110.

The reporting module 1110 is configured to report, by the terminal, RA information of a new radio (NR) cell, in response to receiving an RA information reporting request sent by an evolved universal terrestrial radio access (E-UTRA) base station.

In some embodiments, the apparatus is applicable in any of following dual connection scenarios:
E-UTRA NR dual connectivity with E-UTRA connected to 5th generation core network (NGEN-DC); or
NR E-UTRA dual Connectivity (EN-DC) connected to an evolved packet core (EPC) network.

In some embodiments, the RA information of the NR cell includes RA information of at least one cell in a secondary cell group (SCG) recorded by the terminal.

In some embodiments, the reporting module 1110 includes:
a determining unit 1111, configured to in a case where random access is initiated in at least one cell in the secondary cell group, determine to record the RA information of the at least one cell;
in which the determining unit 1111 is further configured to in a case where random access is initiated in at least one cell in a primary cell group, determine not to record the RA information of the at least one cell.

In some embodiments, the RA information is recorded in an NR RA report variable.

In some embodiments, the RA information reporting request comprises any one of: an existing long term evolution (LTE) RA information reporting request; or a newly defined RA information reporting request.

In some embodiments, the reporting module 1110 is configured to: in a case where a reporting condition is met, report by the terminal the RA information of the NR cell.

In some embodiments, the reporting condition comprises at least one of: existence of RA information of an available NR cell; or RA information of the NR cell registered to a public land mobile network (PLMN) being recorded.

In some embodiments, the reporting module 1110 is configured to: report capability information, wherein the capability information is used to indicate whether the terminal supports reporting the RA information of the NR cell; and/or report an availability indication, wherein the availability indication is used to indicate that the terminal has RA information of an available NR cell.

In some embodiments, the RA information reporting request is carried in a user equipment (UE) information request message; the RA information is carried in a UE information response message.

In some embodiments, the apparatus further includes:
a discarding module 1120, configured to, after the RA information is successfully reported, discard the RA information successfully reported; or after delaying a first duration, discard the RA information.

In summary, with the apparatus provided in the present disclosure, after receiving the RA information reporting request sent by the E-UTRA base station, the terminal reports the RA information of the NR cell, so that the SN RA Report may be supported in the NGEN-DC scenario and the EN-DC scenario.

FIG. 13 is a block diagram of a random access apparatus according to an embodiment of the present disclosure. The apparatus may be implemented as part or all of an E-UTRA base station by software, hardware, or a combination thereof. The apparatus includes a sending module 1310 and a receiving module 1320.

The sending module 1310 is configured to send an RA information reporting request to a terminal.

The receiving module 1320 is configured to receive an RA information of a new radio (NR) cell reported by the terminal.

In some embodiments, the apparatus is applicable in any of following dual connection scenarios:
E-UTRA NR dual connectivity with E-UTRA connected to 5th generation core network (NGEN-DC); or
NR E-UTRA dual Connectivity (EN-DC) connected to an evolved packet core (EPC) network.

In some embodiments, the RA information of the NR cell includes RA information of at least one cell in a secondary cell group (SCG) recorded by the terminal.

In some embodiments, the RA information reporting request comprises any one of: an existing long term evolution (LTE) RA information reporting request; or a newly defined RA information reporting request.

In some embodiments, the receiving module 1320 is configured to: receive capability information, wherein the capability information is used to indicate whether the terminal supports reporting the RA information of the NR cell; and/or
receive an availability indication, wherein the availability indication is used to indicate that the terminal has RA information of an available NR cell.

In some embodiments, the RA information reporting request is carried in a user equipment (UE) information request message; the RA information is carried in a UE information response message.

In summary, with the apparatus provided in the present disclosure, after receiving the RA information reporting request sent by the E-UTRA base station, the terminal reports the RA information of the NR cell, so that the SN RA Report may be supported in the NGEN-DC scenario and the EN-DC scenario.

FIG. 14 is a block diagram of a UE according to an embodiment of the present disclosure. The UE includes: a processor 1401, a receiver 1402, a transmitter 1403, a memory 1404 and a bus 1405.

The processor 1401 includes one or more processing cores. The processor 1401 executes various functional applications and information processing by running software programs and modules.

The receiver 1402 and the transmitter 1403 may be implemented as a communication component, and the communication component may be a communication chip.

The memory 1404 is connected to the processor 1401 through the bus 1405.

The memory 1404 may be used to store at least one instruction, and the processor 1401 is used to execute the at least one instruction to implement each step in the above method embodiments.

Additionally, the memory 1404 may be implemented by any type of volatile or non-volatile storage device, or a combination thereof, including but not limited to: magnetic or optical disks, electrically erasable programmable Read-only memory (EEPROM), erasable programmable read only memory (EPROM), static random-access memory (SRAM), read-only memory (ROM), magnetic memory, flash memory, programmable read-only memory (PROM).

In an embodiment, a non-transitory computer-readable storage medium including instructions, such as a memory including instructions, is also provided, and the instructions may be executed by a processor of the UE to complete the above random access resource configuration method. For example, the non-transitory computer-readable storage medium may be ROM, random access memory (RAM), compact disc read-only memory (CD-ROM), magnetic tape, floppy disks and optical data storage devices, etc.

A non-transitory computer-readable storage medium is provided, when the instructions in the non-transitory computer storage medium are executed by a processor of the UE, the UE may perform the above random access resource configuration method.

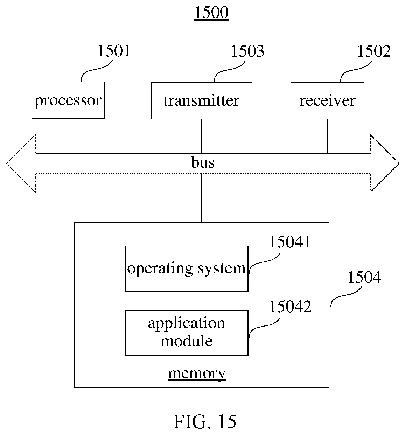

FIG. 15 is a block diagram of a network device 1500 according to an embodiment. The network device 1500 may be a base station.

The network device 1500 may include: a processor 1501, a receiver 1502, a transmitter 1503, and a memory 1504. The receiver 1502, the transmitter 1503 and the memory 1504 are respectively connected to the processor 1501 through a bus.

The processor 1501 includes one or more processing cores, and the processor 1501 executes the random access method provided by the embodiments of the present disclosure by running software programs and modules. The memory 1504 may be used to store software programs and modules. Specifically, the memory 1504 may store an operating system 15041 and at least one application module 15042 required for the functions. The receiver 1502 is used to receive communication data sent by other devices, and the transmitter 1503 is used to send communication data to other devices.

An embodiment of the present disclosure also provides a computer-readable storage medium. The computer-readable storage medium stores at least one instruction, at least one program, a code set or an instruction set. The at least one instruction, the at least one program, the code set or the instruction set is loaded and executed by the processor to implement the steps in the random access reporting method on the terminal side provided by the above method embodiments, or the steps in the random access reporting method on the network device side provided by the above aspects.

An embodiment of the present disclosure also provides a computer program product, the computer program product includes computer instructions, the computer instructions are stored in a computer-readable storage medium; a processor of a computer device reads the computer instructions from the computer-readable storage medium, and the processor executes the computer instructions, so that the computer device performs the steps in the random access reporting method on the terminal side provided by the above method embodiments, or the steps in the random access reporting method on the network device side provided by the above aspects.

It should be understood that the term "plurality" mentioned in the present disclosure means two or more. The term "and/or" describes the relationship between related objects, indicating that there can be three relationships. For example, A and/or B can mean: A exists alone, A and B exist simultaneously, and B exists alone. The character "/" generally indicates that the related objects are in an "or" relationship.

Those skilled in the art may understand that numbers like "first" and "second" in the present disclosure are used to describe various information, but such information should not be limited to these terms. These terms are only used to distinguish information of the same type from each other and do not imply a specific order or importance. In fact, expressions such as "first" and "second" can be used interchangeably. For example, without departing from the scope of the present disclosure, a first message frame may also be called a second message frame, and similarly, the second message frame may also be called the first message frame.

It will be further understood that although operations are described in a specific order in the drawings of the embodiments of the present disclosure, which should not be understood as requiring that these operations should be performed in the specific order shown or in a serial order, or requiring that all operations shown are performed.

Other embodiments of the present disclosure will be readily apparent to those skilled in the art in consideration of the specification and practice of the invention disclosed herein. The present disclosure is intended to cover any variations, usages, or adaptations of the present disclosure that follow the general principles of the present disclosure and include common sense or customary technical means in the technical field that are not disclosed in the present disclosure. The specification and examples should be considered as illustrative only, with a true scope and spirit of the present disclosure being indicated by the following claims.

It is to be understood that the present disclosure is not limited to the precise structures described above and illustrated in the accompanying drawings, and various modifications and changes may be made without departing from the scope thereof. The scope of the disclosure is limited only by the appended claims.

## Claims

1. A random access (RA) reporting method, performed by a terminal, comprising:
reporting, by the terminal, RA information of a new radio (NR) cell, in response to receiving an RA information reporting request sent by an evolved universal terrestrial radio access (E-UTRA) base station.

2. The method of claim 1, wherein the method is applicable in any of following dual connection scenarios:
E-UTRA NR dual connectivity with E-UTRA connected to 5^{th} generation core network (NGEN-DC); or
NR E-UTRA dual connectivity (EN-DC) connected to an evolved packet core (EPC) network.

3. The method of claim 1, wherein the RA information of the NR cell comprises RA information of at least one cell in a secondary cell group (SCG) recorded by the terminal.

4. The method of claim 2, further comprising:
in a case where random access is initiated in at least one cell in a secondary cell group, determining to record the RA information of the at least one cell;
in a case where random access is initiated in at least one cell in a master cell group, determining not to record the RA information of the at least one cell.

5. The method of any of claims 1-4, wherein the RA information is recorded in an NR RA report variable.

6. The method of any of claims 1-4, wherein the RA information reporting request comprises any one of:
an existing long term evolution (LTE) RA information reporting request; or
a newly defined RA information reporting request.

7. The method of any of claims 1-4, wherein reporting by the terminal the RA information of the SCG cell comprises:
in a case where a reporting condition is met, reporting by the terminal the RA information of the SCG cell.

8. The method of claim 7, wherein the reporting condition comprises at least one of:
existence of RA information of an available NR cell; or
RA information of the NR cell registered to a public land mobile network (PLMN) being recorded.

9. The method of any of claims 1-4, further comprising:
reporting capability information, wherein the capability information is used to indicate whether the terminal supports reporting the RA information of the NR cell; and/or
reporting an availability indication, wherein the availability indication is used to indicate that the terminal has RA information of an available NR cell.

10. The method of any of claims 1-4, wherein
the RA information reporting request is carried in a user equipment (UE) information request message;
the RA information is carried in a UE information response message.

11. The method of claim 9, further comprising:
after the RA information is successfully reported, discarding the RA information successfully reported; or
after delaying a first duration, discarding the RA information.

12. A random access (RA) reporting method, performed by an evolved universal terrestrial radio access (E-UTRA) base station, comprising:
sending an RA information reporting request to a terminal; and
receiving an RA information of a new radio (NR) cell reported by the terminal.

13. The method of claim 12, wherein the method is applicable in any of following dual connection scenarios:
E-UTRA NR dual connectivity with E-UTRA connected to 5^{th} generation core network (NGEN-DC); or
NR E-UTRA dual connectivity (EN-DC) connected to an evolved packet core (EPC) network.

14. The method of claim 12, wherein the RA information of the NR cell comprises RA information of at least one cell in a secondary cell group (SCG) recorded by the terminal.

15. The method of claim 12, wherein the RA information reporting request comprises any one of:
an existing long term evolution (LTE) RA information reporting request; or
a newly defined RA information reporting request.

16. The method of any of claims 12-15, further comprising:
receiving capability information, wherein the capability information is used to indicate whether the terminal supports reporting the RA information of the NR cell; and/or
receiving an availability indication, wherein the availability indication is used to indicate that the terminal has RA information of an available NR cell.

17. The method of any of claims 12-15, wherein
the RA information reporting request is carried in a user equipment (UE) information request message;
the RA information is carried in a UE information response message.

18. A random access (RA) reporting apparatus, comprising:
a reporting module, configured to report, by a terminal, RA information of a new radio (NR) cell, in response to receiving an RA information reporting request sent by an evolved universal terrestrial radio access (E-UTRA) base station.

19. A random access (RA) reporting apparatus, comprising:
a sending module, configured to send an RA information reporting request to a terminal; and
a receiving module, configured to receive an RA information of a new radio (NR) cell reported by the terminal.

20. A terminal, comprising:
a processor;
a transceiver connected to the processor;
wherein the processor is configured to execute executable instructions to perform the method of any one of claims 1 to 11.

21. A network device, comprising:
a processor;
a transceiver connected to the processor;
wherein the processor is configured to execute executable instructions to perform the method of any one of claims 12 to 17.

22. A computer-readable storage medium for storing at least one instruction, at least one program, a code set or an instruction set, wherein the at least one instruction, the at least one program, the code set or the instruction set are loaded and executed by a processor, to perform the method of any one of claims 1 to 17.
